# EUROPEAN PATENT APPLICATION

(11) **EP 1 024 541 A2**
(43) Date of publication of application: **02.08.2000**
(21) Application number: 00300683.0
(22) Date of filing: 28.01.2000
(51) Int. Cl.: H01L 49/00, H01L 33/00, H04B 10/04, H01S 3/063, H04J 14/00

(54) **Light source for emitting light having a plurality of wavelengths and an optical transmitter having the same**

(30) Priority: 28.01.1999 JP 1983999; 11.06.1999 JP 16492799
(71) Applicant: NEC Corporation, Minato-ku, Tokyo 108-8001 (JP)
(72) Inventor: Kagawa, Hideaki, c/o NEC Corporation, Tokyo 108-8001 (JP); Nomura, Kenichi, c/o NEC Corporation, Tokyo 108-8001 (JP); Koga, Tadashi, c/o NEC Corporation, Tokyo 108-8001 (JP); Hara, Yasushi, c/o NEC Corporation, Tokyo 108-8001 (JP); Tanaka, Hiroaki, c/o NEC Corporation, Tokyo 108-8001 (JP); Matsuoka, Isao, c/o NEC Corporation, Tokyo 108-8001 (JP)
(74) Representative: Abnett, Richard Charles

(57) **Abstract**

A light source which emits light having a plurality of wavelengths comprises an amplified spontaneous emission (ASE) light source (1) for emitting ASE light and an arrayed waveguide grating (AWG) (2). The AWG outputs light having a specified wavelength from the naturally emitted light. Other light sources comprise an ASE light source (1), a coupler (4) for dividing the ASE light, and band-pass filters (5) for selecting light having predetermined wavelengths from among the divided light. The band-pass filter can be replaced with a combination composed of a circulator (8) and fiber gratings (9). The ASE light may be input to the AWG (2) or the coupler (4) after conversion into light having predetermined wavelengths by a plurality of the fiber gratings (9). An optical transmitter which comprises the foregoing light source (1), a modulator (12) and a wavelength multiplexer (13) is disclosed.

## Description

### BACKGROUND OF THE INVENTION

### 1. Field of the Invention

The present invention relates to a light source for emitting light having a plurality of different wavelengths, and to an optical transmitter having such a light source. More particularly the invention is applicable to a light source for emitting light having a predetermined number of different wavelengths selectively among amplified spontaneous emission light (hereinafter referred to as ASE light)

### 2. Description of the Related Prior Art

In an optical transmitting system, optical wavelength division-multiplexing technologies have recently been used in order to increase transmission capacity. This system comprises principally an optical transmitter, an optical receiver and an optical fiber transmission line. The optical transmitter comprises a plurality of laser diodes (hereinafter referred to as LD), each of which emits light having an intrinsic wavelength, and transmits a wavelength multiplexing light signal to the optical fiber transmission line. An optical direct amplifier arranged on the optical fiber transmission line amplifies the attenuated wavelength multiplexed light signal. The optical direct amplifier comprises an optical fiber doped with a rare earth metal such as erbium and a pumping source for emitting pumping light to the optical fiber. The optical direct amplifier amplifies, by means of the pumping light, the wavelength multiplexed light signal introduced into the optical fiber doped with the rare earth metal.

The optical direct amplifier usually amplifies the incident light so that the total power of the emitted light has a constant output level. For this reason, when the number of multiplexed signal light wavelengths propagated on the optical fiber transmission line changes, the level of each light signal emitted from the optical direct amplifier changes. In other words, when the number of the signal light wavelengths becomes smaller than that initially set, the power of each of the light signals emitted from the optical direct amplifier increases. On the contrary, when the number of the signal light wavelengths becomes larger than that initially set, the power of each of the light signals emitted from the optical direct amplifier reduces. If the number of the light signals changes, as described above, the level of each of the light signals on the optical fiber transmission line changes from that initially set.

In order to enable the optical transmission system to be upgraded in the future, the system is generally constructed so that a larger number of optical signals can be used than the number of optical signals initially used. In this case, in order not to allow the level of each of the light signals to change after the number of the light signals to be used has changed, dummy light corresponding to the light signals that are not initially used is transmitted to the optical fiber transmission line. Accordingly, the optical transmitter has to comprise an LD light source which emits only dummy light at first. However, LD light sources are usually expensive. When LD light sources of the number of light signals that might be used in the future are required, an increase in cost of the light transmitter is brought about, and also the optical transmission system becomes large in size.

### SUMMARY OF THE INVENTION

According to a first aspect of the invention there is provided a light source which emits light having a plurality of different wavelengths, the light source comprising a wide band light source device for emitting wide band wavelength light, and an arrayed waveguide grating (hereinafter referred to as an AWG) for emitting a predetermined number of light wavelengths from among said wide band wavelength light, the light wavelengths being different from each other.

The light source may further comprise a circulator connected to the wide band light source, and a plurality of fiber gratings connected to the circulator, wherein the plurality of fiber gratings (hereinafter referred to as FGs) are connected in series to each other, and light reflected by the fiber gratings are output from the circulator and input to the arrayed waveguide grating.

According to a second aspect of the invention there is provided a light source which emits light having a plurality of different wavelengths, the light source comprising a wide band light source for emitting wide band wavelength light, a coupler (hereinafter referred to as a CPL) for dividing the wide band wavelength light into light components of a predetermined number, and a plurality of band-pass filters, each allowing light having a predetermined wavelength from among the divided light components to pass through it selectively.

This light source may further comprise a circulator connected to the wide band light source, and a plurality of fiber gratings connected to the circulator, wherein the plurality of fiber gratings are connected in series to each other, and light reflected by corresponding ones of the fiber gratings is output from the circulator and then input to the coupler.

According to another aspect of the invention there is provided a light source which emits light having a plurality of different wavelengths, the light source comprising a wide band light source device for emitting wide band wavelength light, a coupler for dividing the wide band wavelength light into light components of a predetermined number, a plurality of circulators, each receiving a corresponding one of the light components divided by the coupler from the coupler, and a plurality of fiber gratings, each connected to a corresponding one of the circulators and reflecting light having a predetermined wavelength from among the divided lights components, wherein each of the circulators outputs light of the predetermined wavelength reflected by the corresponding one of the fiber gratings.

According to a further aspect of the invention there is provided an optical transmitter which emits wavelength multiplexed light, comprising a wide band light source device for emitting amplified spontaneous emission light; means for selecting a plurality of light components having predetermined wavelengths from the light emitted from the wide band light source, a plurality of modulators connected to the selection means, and a wavelength multiplexer for multiplexing each light wavelength output from a corresponding one of the modulators.

In all the above aspects of the invention, the wide band light source device which emits light having a wide bandwidth is preferably an ASE light source which emits ASE light. The light source need include no laser diode light source, and is capable of easily transmitting light having different wavelengths from the ASE light source.

### BRIEF DESCRIPTION OF THE DRAWINGS

The invention will now be described by way of example with reference to the accompanying drawings, in which:
**Fig. 1** is a block diagram showing a first embodiment of the present invention, which comprises an AWG;
**Fig. 2** is a block diagram showing a second embodiment of the present invention, which comprises the AWG, a circulator and FGs;
**Fig. 3** is a block diagram showing a third embodiment of the present invention, which comprises a CPL;
**Fig. 4** is a block diagram showing a fourth embodiment of the present invention, which comprises a CPL, a circulator and FGs;
**Fig. 5** is a block diagram showing a fifth embodiment of the present invention, which comprises a CPL, circulators and FGs; and
**Fig. 6** is a block diagram showing the constitution of an exemplary light transmitter.

### DETAILED DESCRIPTION OF THE PREFERRED EMBODIMENTS

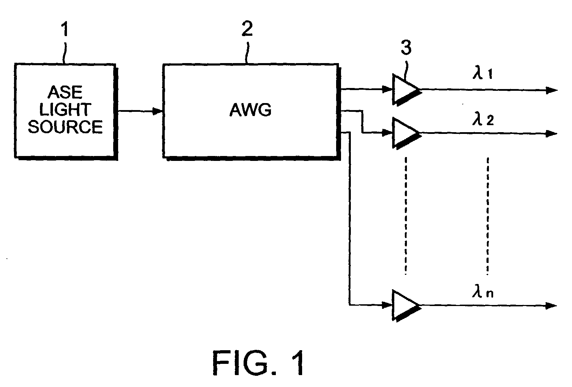

A light source of a first embodiment shown in Fig. 1 comprises an amplified spontaneous emission (ASE) light source 1, an arrayed waveguide grating (AWG) 2, and a plurality of optical amplifiers 3. The ASE light source 1 generates continuous light having wide band wavelength components. The ASE light source 1 is a wide band wavelength (wide bandwidth) light source composed of, for example, an optical direct amplifier to which no input is supplied. The ASE light source 1 emits continuous light having a wide wavelength band. The continuous light is directly incident onto an input port of the AWG 2. The AWG 2, which is a known optical device, comprises one input port and n output ports, and divides the wide band wavelength light incident onto its input port into n light beams, each of which has a predetermined one of the wavelengths λ1, λ2, ...., λn. The AWG 2 outputs the divided light wavelengths from the corresponding output ports. The optical amplifiers 3 respectively amplify the output light signals, each having a corresponding wavelength.

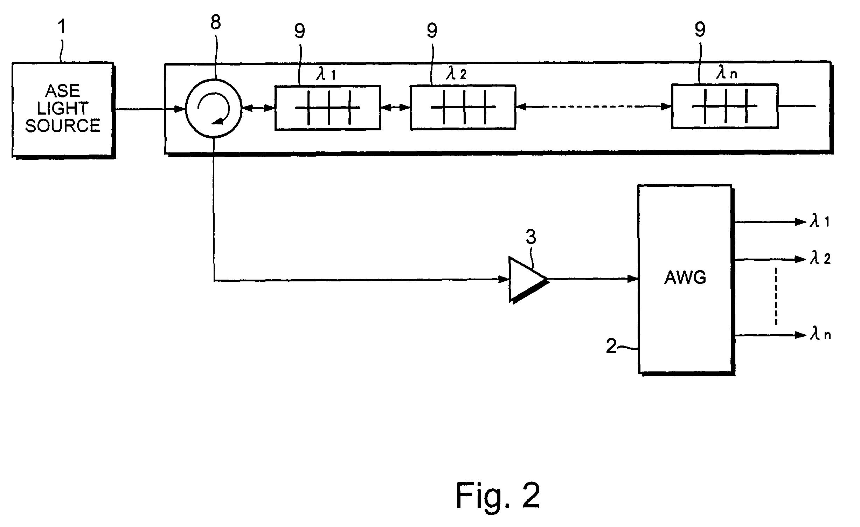

In a light source of a second embodiment shown in Fig. 2, a wide band wavelength light source 1 composed of an ASE light source is connected to the first port of a circulator 8. There are n fibre gratings (FGs) 9 connected in series to each other and connected to the second port of the circulator 8. A third port of the circulator 8 is connected to an AWG 2 with an optical amplifier 3 interposed therebetween. A continuous light signal containing wide band wavelength components, which is emitted from the ASE light source 1, passes through the circulator 8, and is allowed to be incident onto the group of n FGs 9 for selecting wavelengths. Each of the n FGs 9 reflects respectively light having a predetermined wavelength from among the light wavelengths incident from the circulator 8. The FG 9 is a known optical device having a structure in which the refractive index of a core portion of the optical fiber changes periodically. Each of the predetermined wavelengths reflected by the FGs 9 is output from the third port of the circulator 8, and travels through a single optical fiber. Then, the light is amplified by the optical amplifier 3, and is incident onto the AWG2. The AWG2 individually outputs each of the light wavelengths incident onto it having a respective wavelength. The light source of the second embodiment is designed so that the light reflected by each of the FGs 9 respectively corresponds to light selectively output from the AWG 2. Since only n narrow spectrum light signals reflected by the FGs 9 are amplified in this light source, light signals with a high power can be obtained. Moreover, since the AWG 2 cuts out light components having wavelengths other than those selected, which are added at the time of the amplification by the optical amplifier 3, a high SN (signal-to-noise) ratio can be obtained.

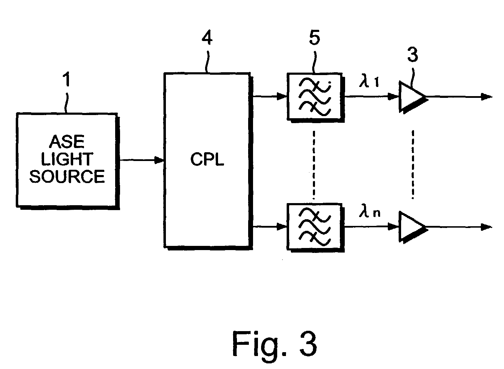

A light source of a third embodiment shown in Fig. 3 comprises an ASE light source 1, a coupler (CPL) 4, band-pass filters 5 and optical amplifiers 3. The CPL 4 divides continuous light having wide band wavelength components, which is emitted from the ASE light source 1, into n light components, and outputs the n light wavelengths. The CPL 4 is connected to n band-pass filters 5. Each of the band-pass filters 5 selects light having a predetermined wavelength from among the n divided light wavelengths, and outputs the selected light wavelengths. Each of the optical amplifiers 3 connected to the respective band-pass filters 5 amplifies the light having the predetermind wavelength input into it.

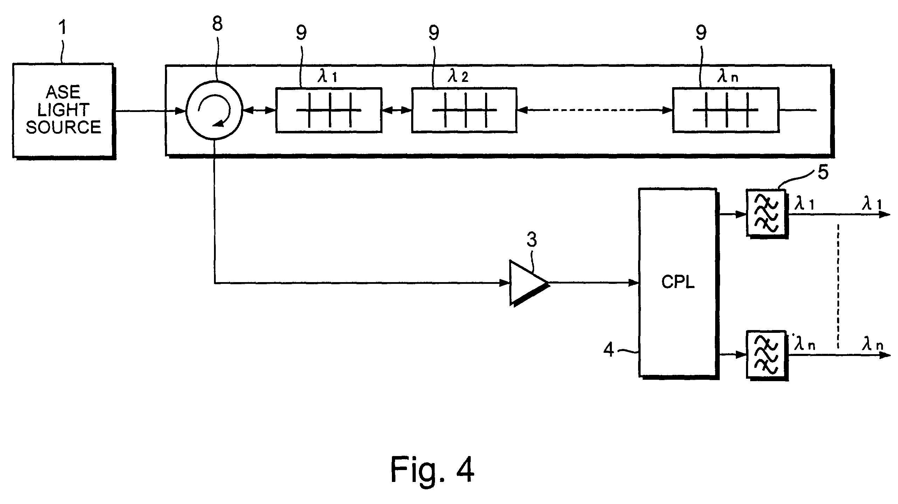

In a light source of the fourth embodiment shown in Fig. 4, an ASE light source 1 is connected to n FGs 9 connected in series to each other with a circulator 8 interposed therebetween, similarly to the second embodiment. Each of the predetermined wavelengths reflected by a corresponding one of the FGs 9 is output from the circulator a to a single optical fiber. This light is amplified by an amplifier 3, and then incident onto a CPL 4. The CPL 4 is connected to n band-pass filters 5. The CPL 4 divides the light into n predetermined light wavelengths. Each of the band-pass filters 5 selects light having a predetermined wavelength from among the n divided light wavelengths and outputs the selected light. Also in the light source of the fourth embodiment, since only the n narrow spectrum light signals reflected by the FGs 9 are amplified, a light signal with a high power can be obtained. Moreover, since the band-pass filters 5 cut out light components having wavelengths other than those selected, which are added at the time of the amplification by the optical amplifier 3, a high SN ratio can be realized.

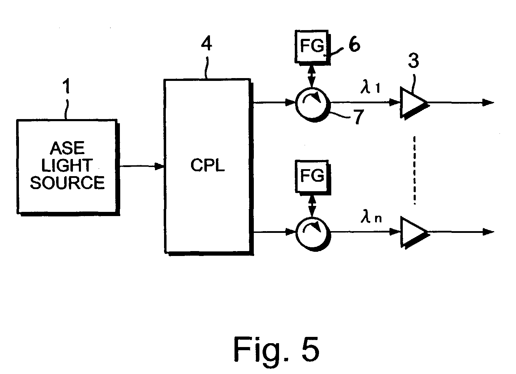

A light source of the fifth embodiment shown in Fig. 5 comprises an ASE light source 1, a CPL 4, circulators 7, and FGs 6. The CPL 4 divides continuous light containing wide band wavelength components emitted from the ASE light source 1 into n light components, and outputs the divided light wavelengths. The n divided light wavelengths from the CPL 4 are respectively input to the circulators 7, and then input to the corresponding FGs 6, each of which is connected to a corresponding one of the circulators 7. Each of the circulators 7 reflects light having a predetermined wavelength respectively. Each reflected light component is output from a corresponding one of the circulators 7, and amplified by corresponding one of the optical amplifiers 3.

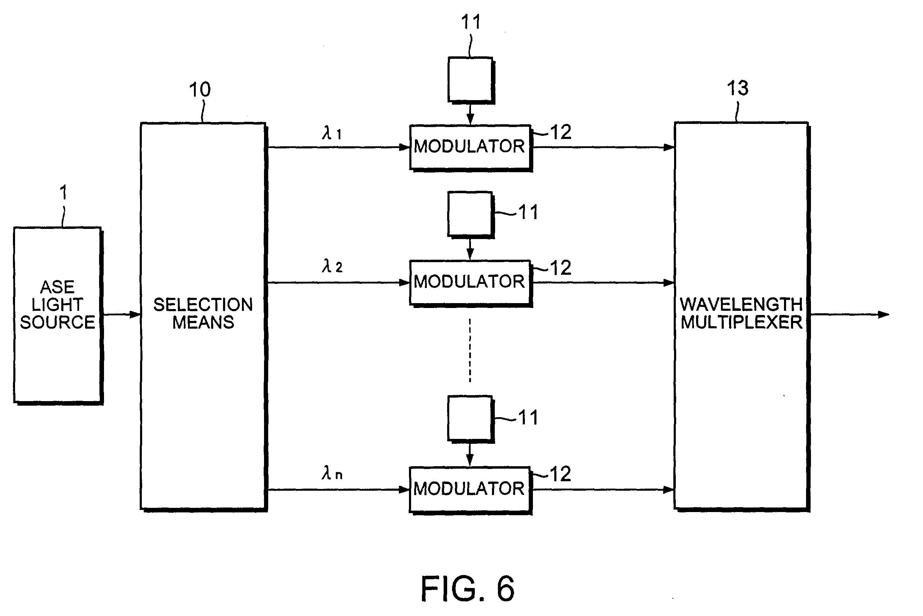

Fig. 6 shows an example of a light transmitter utilizing ASE light. Selection means 10 divides ASE light emitted from a light source 1 into a plurality of specified light wavelengths. The divided light wavelengths are output from the selection means 10. Each of the corresponding modulators 12, which is connected to corresponding one of controlling circuits 11, adds a predetermined signal to the corresponding one of the light components having the respective wavelength. A wavelength multiplexer 13 multiplexes the light wavelengths and outputs multiplexed light. Each modulator 12 outputs light used as dummy light to the wavelength multiplexer 13 without modulating it. It should be noted that the constituent components which are the apparatuses shown in the above Figs. 1 to 5, other than the ASE light source 1, are used as the selection means 10.

The wavelengths of the light emitted from the light sources are, for example, in the 1.55 µ band, and spaced from each other by about 0.8 nm.

The light source described is capable of easily emitting dummy light without using a laser diode (LD) light source, and hence a light source which is inexpensive and small in size can be achieved.

While the present invention has been described in connection with certain preferred embodiments, it is understood that the subject matter encompassed by the present invention is not limited to those specific embodiments. On the contrary, it is intended to include all alternatives, modifications, and equivalents as can be included within the scope of the following claims.

## Claims

1. A light source which emits light having a plurality of different wavelengths, characterised by:
a wide band light source device (1) for emitting wide band wavelength light; and
an arrayed waveguide grating (2) for emitting a predetermined number of light wavelengths from among said wide band wavelength light, the light wavelengths being different from each other.

2. The light source according to claim 1, further comprising an optical amplifier (3) for amplifying each light wavelength output from the arrayed waveguide grating (2).

3. The light source according to claim 1 or 2, wherein the wide band light source device (1) is directly connected to the arrayed waveguide grating (2).

4. The light source according to claim 1, 2 or 3, wherein the wide band light source device (1) is a light source for emitting amplified spontaneous emission light.

5. The light source according to any of claims 1 to 4, further comprising:
a circulator (8) connected to the wide band light source device (1); and
a plurality of fiber gratings (9) connected to the circulator;
wherein the plurality of fiber gratings are connected in series to each other, and light reflected by the fiber gratings are output from the circulator (8) and input to the arrayed waveguide grating (2).

6. The light source according to claim 5, further comprising an optical amplifier (3) for amplifying the light output from the circulator.

7. A light source which emits light having a plurality of different wavelengths, characterised by:
a wide band light source device (1) for emitting wide band wavelength light;
a coupler (4) for dividing the wide band wavelength light into light components of a predetermined number; and
a plurality of band-pass filters (5), each allowing light having a predetermined wavelength from among the divided light components to pass through it selectively.

8. The light source according to claim 7, further comprising a plurality of optical amplifiers (3), each amplifying the light passing through corresponding one of the band-pass filters.

9. The light source according to claim 7 or 8, wherein the wide band light source device (1) is a light source for emitting amplified spontaneous emission light.

10. The light source according to claim 7, 8 or 9, further comprising:
a circulator (8) connected to the wide band light source device (1); and
a plurality of fiber gratings (9) connected to the circulator;
wherein the plurality of fiber gratings are connected in series to each other, and light reflected by corresponding ones of the fiber gratings is output from the circulator (8) and then input to the coupler (4).

11. The light source according to claim 10, further comprising an optical amplifier (3) for amplifying the light output from the circulator.

12. The light source according to claim 10 or 11, wherein each of the fiber gratings (9) allows light reflected by a corresponding fiber grating to pass through it.

13. A light source which emits light having a plurality of different wavelengths, the light source comprising:
a wide band light source device (1) for emitting wide band wavelength light;
a coupler (4) for dividing the wide band wavelength light into light components of a predetermined number;
a plurality of circulators (7), each receiving a corresponding one of the light components divided by the coupler (4) from the coupler; and
a plurality of fiber gratings (6), each connected to a corresponding one of the circulators and reflecting light having a predetermined wavelength from among the divided lights components;
wherein each of the circulators (7) outputs light of the predetermined wavelength reflected by the corresponding one of the fiber gratings.

14. The light source according to claim 13, wherein the wide band light source device (1) is a light source for emitting amplified spontaneous emission light.

15. The light source according to claim 13 or 14, further comprising a plurality of optical amplifiers (3) for amplifying each light component emitted from a corresponding one of the circulators.

16. An optical transmitter which emits wavelength multiplexed light, characterised by:
a wide band light source device (1) for emitting amplified spontaneous emission light;
means (10) for selecting a plurality of light components having predetermined wavelengths from the light emitted from the wide band light source device (1);
a plurality of modulators (12) connected to the selection means (10); and
a wavelength multiplexer (13) for multiplexing each light wavelength output from a corresponding one of the modulators.

17. The optical transmitter according to claim 16, wherein the selection means (10) comprises an arrayed waveguide grating.

18. The optical transmitter according to claim 16 or 17, wherein the selection means (10) comprises a circulator (8), a plurality of fiber gratings (9) connected to the circulator, and an arrayed waveguide grating (2), the plurality of fiber gratings being connected in series to each other, and light reflected by the fiber gratings (9) being output from the circulator (8) and then input to the arrayed waveguide grating (2).

19. The optical transmitter according to claim 16 or 17, wherein the selection means (10) comprises:
a coupler (4); and
a band-pass filter (5) for allowing light having a predetermined wavelength from divided light output from the coupler to pass through it.

20. The optical transmitter according to claim 16 or 17, wherein the selection means (10) comprises a circulator (8), a plurality of fiber gratings (9) connected to the circulator (8), a coupler (4) connected to the circulator, and a band-pass filter (5) for allowing light having a predetermined wavelength from divided light output from the coupler to pass through it, and wherein the plurality of fiber gratings (9) are coupled in series to each other, and light reflected by a corresponding one of the fiber gratings is output from the circulator, and input to the coupler.

21. The optical transmitter according to claim 16 or 17, wherein the selection means (10) comprises a coupler (4), circulators (7) for receiving divided light output from the coupler, and fiber gratings (6) connected to the circulators, the fiber gratings respectively reflecting light having a predetermined wavelength, and wherein each of the circulators outputs light having the predetermined wavelength.
